# EUROPÄISCHE PATENTSCHRIFT

(11) **EP 1 483 953 B1**
(45) Veröffentlichungstag und Bekanntmachung des Hinweises auf die Patenterteilung: **13.12.2006**
(21) Anmeldenummer: 04010523.1
(22) Anmeldetag: 04.05.2004
(51) Int. Cl.: A01D 41/06, A01D 41/12

(54) **Hochschnitteinrichtung für Mähdrescher**
High-cutting device for combine
Dispositif de coupe à hauteur pour moissoneuse-batteuse

(30) Priorität: 23.05.2003 DE 10323829
(43) Veröffentlichungstag der Anmeldung: 08.12.2004
(73) Patentinhaber: CLAAS Selbstfahrende Erntemaschinen GmbH, 33428 Harsewinkel (DE)
(72) Erfinder: Evelgünne, Ralf, 48282 Emsdetten (DE); Bürmann, Dominik, 33415 Verl (DE)

(56) Entgegenhaltungen:
- EP-A- 1 378 159
- DD-A- 135 029
- DE-U- 8 605 056

## Beschreibung

Die Erfindung bezieht sich auf eine Hochschnitteinrichtung für das Schneidwerk eines Mähdreschers nach dem Oberbegriff des Patentanspruchs 1.

Derartige Einrichtungen mit hinter dem Hauptschneidwerk angeordneten zusätzlichen Mäh- oder Zerkleinerungsvorrichtungen sind bereits in verschiedenen Ausführungen bekannt.

So ist beispielsweise in der DD-PS 135 029 ein aus mehreren Einzelschneidwerken bestehendes Zusatzschneidwerk dargestellt, dessen einzelne Schneidwerke über beidseitig gelenkig angebrachte Koppelpaare am Hauptschneidwerk oder am Einzugskanal befestigt sind. Durch eine mit den Koppeln verbundene Federvorrichtung wird eine vom Hauptschneidwerk unabhängige Bodenkopierung der einzelnen Zusatzschneidwerke erreicht. Aufgrund des geringen zur Verfügung stehenden Bauraumes unterhalb des Einzugskanals ist der Einsatz dieser Einrichtung jedoch auf Schneidwerke mit geringen Abmessungen und entsprechend kleinen Leistungen begrenzt. Die gleichen Nachteile weist auch das aus dem DE-U-86 05 056 bekannte Zusatzschneidwerk mit in horizontaler Richtung rotierenden Schneidmessern auf, das im Bereich unterhalb des Einzugskanals angeordnet ist.

Der Erfindung liegt die Aufgabe zugrunde, den für die Anordnung der zusätzlichen Häcksel- bzw. Schneideinrichtung erforderlichen Bauraum so zu vergrößern, dass auch leistungsstarke Einrichtungen funktionsgerecht verwendet werden können.

Erfindungsgemäß wird diese Aufgabe durch die im Patentanspruch 1 genannten Merkmale gelöst. Weitere vorteilhafte Ausführungen des Erfindungsgegenstandes ergeben sich aus den nachgeordneten Ansprüchen.

Durch die erfindungsgemäße Anordnung der zusätzlichen Häcksel- bzw. Schneideinrichtung wird mit einem geringen Herstellungs- und Montageaufwand der Einsatz leistungsfähiger Emteeinrichtungen ermöglicht. Infolge der großen vorhandenen Bodenfreiheit unterhalb des Einzugskanals ist insbesondere der Anbau einer Häckseleinrichtung mit um eine horizontal angeordnete Welle rotierenden Messern möglich. Da keine Einschränkung der Bewegungsmöglichkeit durch unzureichende Bauraumverhältnisse vorhanden ist, ist eine Führung am Feldboden über die gesamte Breite mit einer gleichmäßigen niedrigen Schnitthöhe auch in Hanglagen und bei einem unregelmäßigen Feldbodenprofil gewährleistet.

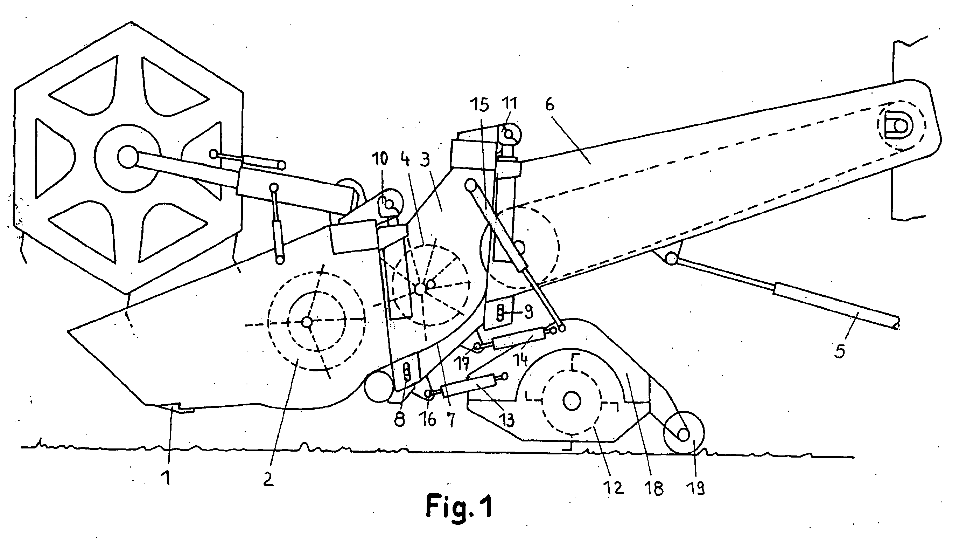

Die Erfindung wird nachstehend an einem Ausführungsbeispiel näher erläutert. In der zugehörigen Zeichnung zeigen
- Fig. 1 -: den vorderen Bereich eines Mähdreschers mit dem Schneidwerk und der zusätzlichen Häckseleinrichtung in einer Seitenansicht,

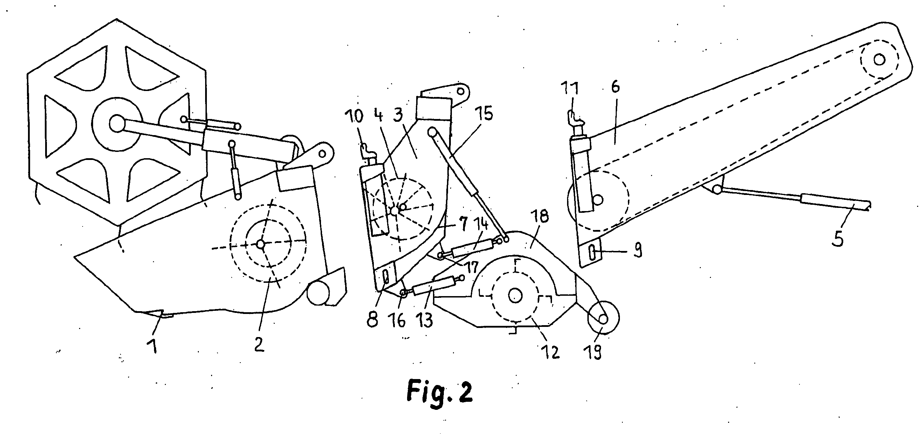

- Fig. 2 -: die in der Fig. 1 dargestellten Hauptbaugruppen im voneinander getrennten Zustand.

Zur getrennten Ernte der Fruchtstände und der unteren Halmteile, beispielsweise des Samens von Gräsern und anderen Halmfrüchten, erfolgt der Hochschnitt der oberen Halmteile mit den Fruchtständen mit einem entsprechend hoch eingestellten Schneidwerk 1. Das gemähte Erntegut gelangt danach über eine Querförderschnecke 2 zu einem Adapterkanal 3 mit einer Fördertrommel 4. Über den sich anschließenden, mittels Hydraulikzylinder 5 höheneinstellbaren Einzugskanal 6, wird das Erntegut zu der nachgeordneten Dresch- und Reinigungseinrichtung gefördert. Unterhalb des Bereiches der Fördertrommel 4 ist am Boden 7 des Adapterkanals 3 eine nicht dargestellte Fremdkörpererkennungsvorrichtung bzw. eine Abscheideeinrichtung angeordnet. Der Adapterkanal 3 ist zwischen dem Schneidwerk 1 und dem Einzugskanal 6 angeordnet. Er stellt eine selbständige Zusatzbaugruppe dar und ist über untere Kopplungselemente 8,9 und obere Kopplungselemente 10, 11 lösbar mit dem Schneidwerk 1 und dem Einzugskanal 6 verbunden. Da die gleiche Ausführung der Kopplungselemente 8,9; 10,11 wie an der Standardausführung der Verbindungsstelle zwischen Schneidwerk 1 und Einzugskanal 6 verwendet wird, ist ein schneller und unkomplizierter An- und Abbau des Adapterkanals möglich. Der Boden 7 des Adapterkanals 3 verläuft in Förderrichtung des Erntegutes stark ansteigend, so dass zwischen der Eingangs- und Abgabeseite ein entsprechend großer Höhenunterschied vorhanden ist. Dadurch befindet sich auch der Einzugskanal 6 in einem erhöhten Bereich über dem Feldboden. Dementsprechend ist unterhalb des Einzugskanals 6 und des Adapterkanals 3 ein erweiteter freier Bauraum vorhanden. In diesem Bauraum ist eine Häckseleinrichtung 12 oder ein Zusatzschneidwerk angeordnet. Beide weisen die gleiche Arbeitsbreite wie das Schneidwerk 1 auf. Mit diesen zusätzlichen Einrichtungen werden die restlichen stehen gebliebenen unteren Halmteile in Bodennähe gehäckselt bzw. abgeschnitten. Dieses Erntegut wird auf dem Feldboden abgelegt und belastet demzufolge nicht die nachgeordneten Arbeitsorgane des Mähdreschers. Die Häckseleinrichtung 12 bzw. das Zusatzschneidwerk ist über untere und obere Lenkerpaare 13,14 gelenkig mit dem Adapterkanal 3 verbunden und über Hydraulikzylinder 15 höheneinstellbar. Die Lenkerpaare 13,14 sind zwischen an unterhalb des Bodens 7 des Adapterkanals 3 befestigten Gelenken 16,17 und den Seitenwänden 18 der Häckseleinrichtung 12 angeordnet. Die Hydraulikzylinder 15 sind beidseitig im oberen Bereich der Seitenwände des Adapterkanals 3 angelenkt und erstrecken sich bis zu den Anlenkpunkten im oberen Bereich der Seitenwände 18 der Häckseleinrichtung 12. Die Führung am Feldboden erfolgt über im rückwärtigen Bereich der Häckseleinrichtung 12 angeordnete einstellbare Stützräder 19. Durch die gelenkbewegliche Ausführung der Verbindung zwischen dem Adapterkanal 3 und der Häckseleinrichtung 12 sowie der vorhandenen großen Bodenfreiheit wird eine gegenüber dem Schneidwerk 1 und dem Einzugskanal 6 unabhängige Anpassung an das Feldbodenprofil und damit eine geringe Schnitthöhe über die gesamte Arbeitsbreite der Häckseleinrichtung 12 erreicht. Während die Häckseleinrichtung 12 vorzugsweise als Schlegelhäcksler ausgebildet ist, ist das Zusatzschneidwerk mit rotierenden oder geradlinig bewegten Messern versehen.

Bei der Umrüstung des Schneidwerkes 1 von Hochschnitt auf Normalschnitt wird lediglich der Adapterkanal mit der Häckseleinrichtung 12 bzw. mit dem Zusatzschneidwerk demontiert und anschließend das Schneidwerk 1 wieder mit dem Einzugskanal 6 verbunden.

### Bezugszeichen

- 1 -: Schneidwerk
- 2 -: Querförderschnecke
- 3 -: Adapterkanal
- 4 -: Fördertrommel
- 5 -: Hydraulikzylinder
- 6 -: Einzugskanal
- 7 -: Boden
- 8,9 -: untere Kopplungselemente
- 10,11 -: obere Kopplungselement
- 12 -: Häckseleinrichtung
- 13 -: untere Lenkerpaare
- 14 -: obere Lenkerpaare
- 15 -: Hydraulikzylinder
- 16,17 -: Gelenke
- 18 -: Seitenwände
- 19 -: Stützräder

## Patentansprüche

1. Hochschnitteinrichtung für das Schneidwerk eines Mähdreschers, bei der mit einem Schneidwerk mit hoher Schnitthöheneinstellung die oberen Fruchtstände von den Halmen abgeschnitten und danach zur Drescheinrichtung gefördert und die unteren stehen gebliebenen Halmteile mit einer dem Schneidwerk nachgeordneten bodengeführten Häckseleinrichtung oder einem Zusatzschneidwerk zerkleinert bzw. abgeschnitten und auf dem Feldboden abgelegt werden, **dadurch gekennzeichnet, dass** die Häckseleinrichtung (12) bzw. das Zusatzschneidwerk an einem an sich bekannten, zwischen dem Schneidwerk (1) und dem Einzugskanal (6) lösbar angeordneten Adapterkanal (3) befestigt ist.

2. Hochschnitteinrichtung nach Anspruch 1, **dadurch gekennzeichnet, dass** der Adapterkanal (3) über untere und obere Kopplungselemente (8,9;10,11) mit dem Schneidwerk (1) und dem Einzugskanal (6) lösbar verbunden ist.

3. Hochschnitteinrichtung nach Anspruch 1 und 2, **dadurch gekennzeichnet, dass** der Boden (7) des Adapterkanals (3) in Förderrichtung stark ansteigend verläuft.

4. Hochschnitteinrichtung nach den Ansprüchen 1 bis 3, **dadurch gekennzeichnet, dass** am Boden (7) des Adapterkanals (3) eine Fremdkörpererkennungs- und Abscheideeinrichtung angeordnet ist.

5. Hochschnitteinrichtung nach den Ansprüchen 1 bis 3, **dadurch gekennzeichnet, dass** der Adapterkanal (3) mit einer Fördertrommel (4) versehen ist.

6. Hochschnitteinrichtung nach den Ansprüchen 1 bis 5, **dadurch gekennzeichnet, dass** die Häckseleinrichtung (12) bzw. das Zusatzschneidwerk über untere und obere Lenkerpaare (13,14) gelenkig mit dem Boden (7) des Adapterkanals (3) verbunden und über Hydraulikzylinder (15) höheneinstellbar ist.

7. Hochschnitteinrichtung nach den Ansprüchen 1 und 6, **dadurch gekennzeichnet, dass** die Häckseleinrichtung (12) vorzugsweise als Schlegelhäcksler ausgebildet ist.

## Claims

1. A high cutting device for the cutting mechanism of a combine harvester, in which the upper crop ears are cut off the stalks with a cutting mechanism with a high cutting height setting and thereafter conveyed to the threshing device and the lower stalk pieces which have remained are comminuted or cut off with a ground-guided chopping device arranged downstream of the cutting mechanism or with an additional cutting mechanism and are deposited on the ground, **characterised in that** the chopping device (12) or the additional cutting mechanism is fixed to a per se known adaptor passage (3) arranged releasably between the cutting mechanism (1) and the intake passage (6).

2. A high cutting device according to claim 1 **characterised in that** the adaptor passage (3) is releasably connected to the cutting mechanism (1) and the intake passage (6) by way of lower and upper coupling elements (8, 9; 10, 11).

3. A high cutting device according to claim 1 and claim 2 **characterised in that** the bottom (7) of the adaptor passage (3) extends rising greatly in the conveyor direction.

4. A high cutting device according to claims 1 to 3 **characterised in that** a foreign body detection and separating device is arranged at the bottom (7) of the adaptor passage (3).

5. A high cutting device according to claims 1 to 3 **characterised in that** the adaptor passage (3) is provided with a conveyor drum (4).

6. A high cutting device according to claims 1 to 5 **characterised in that** the chopping device (12) or the additional cutting mechanism is connected pivotably to the bottom (7) of the adaptor passage (3) by way of lower and upper pairs of links (13, 14) and is adjustable in respect of height by way of hydraulic cylinders (15).

7. A high cutting device according to claims 1 and 6 **characterised in that** the chopping device (12) is preferably in the form of a flail chopper.

## Revendications

1. Dispositif de coupe haute, destiné à la barre de coupe d'une moissonneuse-batteuse, grâce auquel une barre de coupe réglée pour une coupe haute coupe les infrutescences hautes des tiges et les envoie ensuite au dispositif de battage, et un dispositif de hachage ou un dispositif de coupe additionnel, disposé en arrière de la barre de coupe, broie ou coupe les parties des tiges restées debout et les dépose sur le sol du champ, **caractérisé en ce que** le dispositif de hachage (12) ou le dispositif de coupe additionnel est fixé sur un canal d'adaptation (3), connu en soi, monté de manière amovible entre la barre de coupe (1) et le canal d'alimentation (6).

2. Dispositif de coupe haute selon la revendication 1, **caractérisé en ce que** le canal d'adaptation (3) est relié de manière amovible à la barre de coupe (1) et au canal d'alimentation (6) par l'intermédiaire d'éléments d'accouplement inférieurs et supérieurs (8, 9 ; 10, 11).

3. Dispositif de coupe haute selon la revendication 1 et 2, **caractérisé en ce que** le fond (7) du canal d'adaptation (3) présente une forte pente dans la direction du transport.

4. Dispositif de coupe haute selon les revendications 1 à 3, **caractérisé en ce que** le fond (7) du canal d'adaptation (3) possède un dispositif de détection et d'élimination des corps étrangers.

5. Dispositif de coupe haute selon les revendications 1 à 3, **caractérisé en ce que** le canal d'adaptation (3) est équipé d'un tambour de transport (4).

6. Dispositif de coupe haute selon les revendications 1 à 5, **caractérisé en ce que** le dispositif de hachage (12) ou le dispositif de coupe additionnel est monté de manière articulée sur le fond (7) du canal d'adaptation (3), par l'intermédiaire de bras oscillants inférieurs et supérieurs (13, 14) et **en ce qu'**il est réglable en hauteur à l'aide de vérins hydrauliques (15).

7. Dispositif de coupe haute selon les revendications 1 à 6, **caractérisé en ce que** le dispositif de hachage (12) prend de préférence la forme d'un hacheur à fléaux.
